# EUROPEAN PATENT APPLICATION

(11) **EP 3 301 063 A1**
(43) Date of publication of application: **04.04.2018**
(21) Application number: 17194262.6
(22) Date of filing: 29.09.2017
(51) Int. Cl.: B66C 23/62, B60B 35/10, B66F 9/075, E02F 9/02

(54) **A MOTORIZED AXLE WITH VARIABLE TRACK FOR PICK AND CARRY CRANE**

(30) Priority: 30.09.2016 IT 201600098227
(71) Applicant: Berti, Giacomo, 54033 Carrara (MS) (IT); Ribolini, Daniele, 54033 Carrara (MS) (IT)
(72) Inventor: BERTI, Giacomo, 54033 CARRARA (MS) (IT)
(74) Representative: Mari, Marco Giovanni

(57) **Abstract**

A motorized axle with variable track for pick and carry crane comprising a mobile machine and a crane, wherein said axle comprises a fixed main support body (1), a first (2) and a second (2') movable axle shaft, a first (3) and a second (3') cylinder of hydraulic or electric type comprising a body and a rod, a first (4) and a second (4') hydraulic or electric motor, a first (5) and a second (5') gearmotor, a first (6) and a second (6') wheel connected to the respective gearmotor (5, 5'), a first (9) and a second (9') anti-rotation feather key, wherein said main body (1) is permanently anchored to the machine to be driven, in the interior thereof there being housed, with a coupling with one degree of freedom, only sliding, said first (2) and second (2') movable axle shaft, wherein the rotation between the fixed main body (1) and each movable axle shaft (2, 2') is prevented by said first (9) and second (9') anti-rotation feather key; wherein each movable axle shaft (2, 2') comprises a tube (11, 11') and two plates (7, 7', 8, 8') and said tube (11, 11') at one side is anchored to the respective motor (4, 4') and gearmotor (5, 5') through said plate (7, 7'), while the opposite side is anchored to the cylinder rod (3, 3') through said plate (8, 8') comprising a ferrule; wherein the variation in length of said cylinders (3, 3'), commanded by the actuation of a lever or button type selector, causes the sliding of said first and second movable axle shaft (2, 2') inside of said fixed main support body (1), determining the dimensional change of the axle.

## Description

The invention relates to the sector of movable lifting means.

More in detail, the invention concerns the axles of lifting means such as pick and carry cranes: self-propelled cranes without outriggers, used to lift and carry a load to a destination.

The state of the art is represented by an axle that changes track, but is not motorized.

The object of the invention is that of making the operation to vary the width of the axle track easier and faster.

A further object is that of providing countless possibilities of variation of the width of the track, comprised between a minimum and a maximum value.

The objects are achieved with a motorized axle with variable track for pick and carry cranes according to the independent claim 1.

Further features of the invention are described in the subsequent dependent claim.

The main advantage obtained with the present invention consists in the fact that the user of the crane, having a larger front track available, can work in greater safety, reducing the possibility of lateral tipping of the vehicle.

A further advantage is that the crane can limit its footprint on the ground to pass through spaces of limited width.

Further features and advantages of the invention will be more evident from the more detailed description set forth below, with the aid of the drawings, which show a preferred implementation thereof, illustrated by way of non-limiting example, wherein:
Figs. 1A, 1B show, in an axonometric view, a motorized axle with variable track for pick and carry crane, illustrated in two different configurations of width, minimum and maximum respectively;
Figs. 2 and 3 show, respectively in a lateral plan view and in a section according to the plane III-III of Fig. 2, the motorized axle with variable track in the configuration of maximum width of Fig. 1B;
Figs. 4 and 5 show, respectively in a lateral plan view and in a section according to the plane V-V of Fig. 4, the motorized axle with variable track in the configuration of minimum width of Fig. 1A;
Figs. 6 and 7 show, respectively in a front plan view and in a section according to the plane VII-VII of Fig. 6, the motorized axle with variable track in a generic configuration.

With reference to the details of the figures, a motorized axle with variable track for pick and carry crane, comprises:
a main support body 1;
a first 2 and a second 2' movable axle shaft;
a first 3 and a second 3' cylinder of hydraulic or electric type;
a first 4 and a second 4' hydraulic or electric motor;
a first 5 and a second 5' gearmotor;
a first 6 and a second 6' wheel connected to the respective gearmotor 5, 5';
at least a first and a second anti-rotation feather key 9, 9'.

The main body 1 is anchored to the machine to be driven through the blocks 10, 10'. In the main body 1 there are housed, with a coupling with one degree of freedom, that is, only sliding, a first 2 and a second 2' movable axle shaft.

Each movable axle shaft 2, 2' is a structure comprising a tube 11, 11' and two plates; at one side the tube 11, 11' is anchored to the respective motor 4, 4' and gearmotor 5, 5' through a plate 7, 7', while the opposite side is anchored to the cylinder rod 3, 3' through a ferrule 8, 8'.

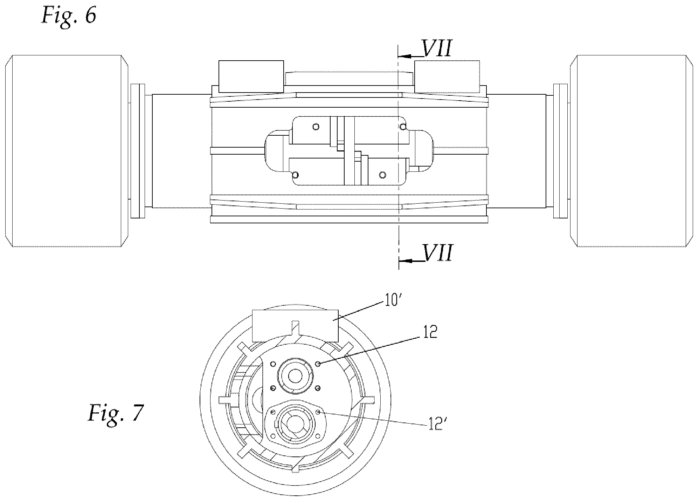

The body of each cylinder 3, 3' is in turn anchored to the main support body 1 by means of screws, whose fixing holes 12, 12' are illustrated in the section of Fig. 7.

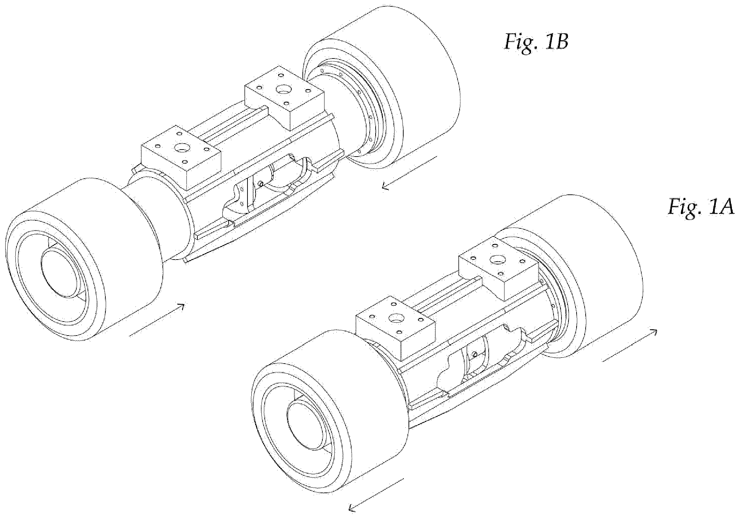

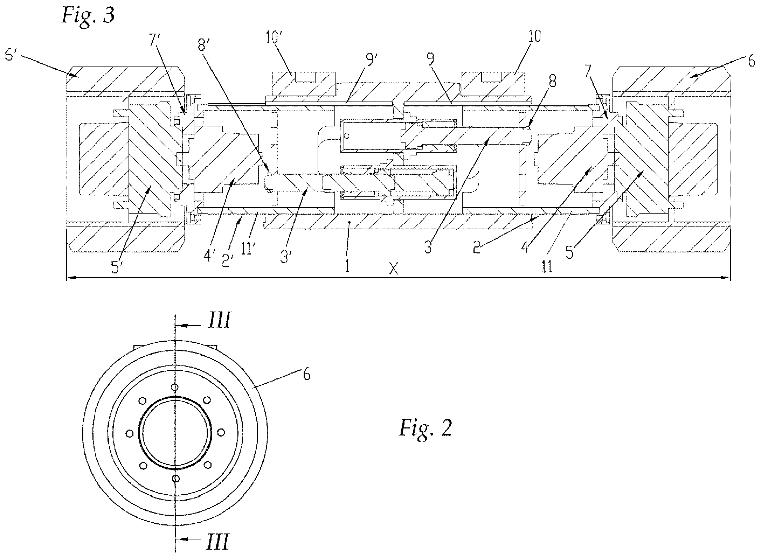

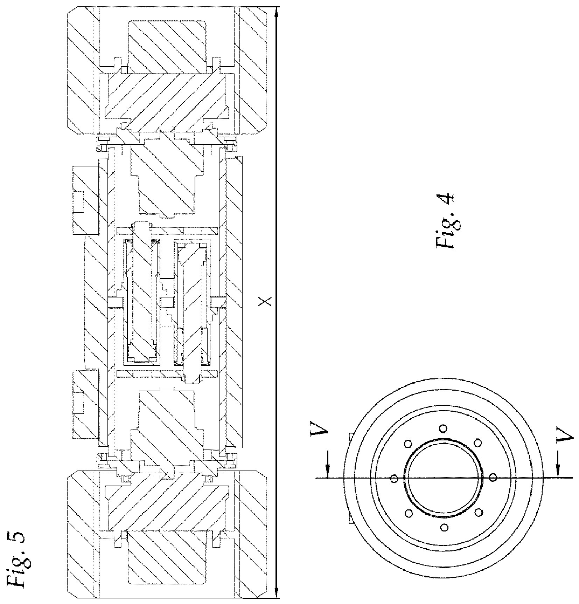

The reciprocating movement of the cylinder rods 3, 3' through the actuation of a selector, which can be a lever or a button, changes the dimensional configuration of the axle, as shown in Figs. 1A and 1B, changing the height X indicated in Figs. 3 and 5, allowing the track of the axle to be adjusted, improving the stability of the machine on which it is installed.

Rotation of the movable axle shaft 2, 2' relative to the main body 1 is prevented through said feather keys 9, 9'.

## Claims

1. A motorized axle with variable track for pick and carry crane of the type comprising a mobile machine and a crane, **characterized in that** said axle comprises:
- a fixed main support body (1);
- a first (2) and a second (2 ') movable axle shaft;
- a first (3) and a second (3 ') cylinder of hydraulic or electric type comprising a body and a rod;
- a first (4) and a second (4 ') motor of hydraulic or electric type;
- a first (5) and a second (5 ') gearmotor;
- a first (6) and a second (6 ') wheel connected to the respective gearmotor (5, 5');
- at least a first (9) and a second (9 ') anti-rotation feather key, wherein said main body (1) is permanently anchored to the machine to be driven and in the interior thereof there are housed, with a coupling with one degree of freedom, that is, only sliding, said first (2) and second (2') movable axle shaft, wherein the rotation between said fixed main body (1) and each movable axle shaft (2, 2 ') is prevented by said at least a first (9) and a second (9') feather key; wherein each movable axle shaft (2, 2 ') comprises a tube (11, 11') and two plates (7, 7 ', 8, 8') and said tube (11, 11') at one side is anchored to the respective motor (4, 4') and gearmotor (5, 5') through said plate (7, 7 '), while the opposite side is anchored to the cylinder rod (3, 3') through said plate (8, 8') comprising a ferrule; wherein the variation in length of said cylinders (3, 3'), commanded by the actuation of a lever or button type selector, causes the sliding of said first and second movable axle shaft (2, 2') inside of said fixed main support body (1), determining the dimensional change of the axle.

2. The motorized axle with variable track according to claim 1, **characterized in that** the body of said first and second cylinders (3, 3') is anchored to said fixed main support body (1) by means of screws.
